# EUROPÄISCHE PATENTSCHRIFT

(11) **EP 0 735 288 B1**
(45) Veröffentlichungstag und Bekanntmachung des Hinweises auf die Patenterteilung: **11.09.2002**
(21) Anmeldenummer: 96104042.5
(22) Anmeldetag: 14.03.1996
(51) Int. Cl.: F16C 13/00

(54) **Kalanderwalze**
Calander roll
Cylindre de calandrage

(30) Priorität: 29.03.1995 DE 19511481; 13.09.1995 DE 19533823
(43) Veröffentlichungstag der Anmeldung: 02.10.1996
(73) Patentinhaber: Voith Paper Patent GmbH, 89522 Heidenheim (DE)
(72) Erfinder: Schmitz, Christian Wimmar, 47906 Kempen (DE)
(74) Vertreter: Knoblauch, Andreas, Dr.-Ing.

(56) Entgegenhaltungen:
- EP-A- 0 462 434
- GB-A- 2 061 455
- US-A- 3 711 913
- US-A- 3 907 232
- US-A- 5 097 596
- US-A- 5 387 451

## Beschreibung

Die Erfindung bezieht sich auf eine Kalanderwalze nach dem Oberbegriff des Anspruchs 1.

Bei den seit vielen Jahrzehnten verwendeten Kalanderwalzen besteht der Bezug aus einer relativ dicken Schicht aus Fasermaterial, das beispielsweise unter der Bezeichnung "Fiberun" vertrieben wird. Zu seiner Herstellung wird eine große Zahl ringförmiger Ronden aus dem Fasermaterial ausgestanzt und auf den Basiskörper geschoben. Dort wird der Rondenstapel durch Verschlußelemente, die ihn axial stark zusammenpressen, gehalten. Schließlich wird der Bezug genau zylindrisch abgedreht. Dieses Material ist markierungsempfindlich. Von Zeit zu Zeit muß daher die Walze ausgebaut, zur Erzeugung einer glatten zylindrischen Oberfläche abgedreht und wieder eingebaut werden. Der Walzendurchmesser verringert sich dementsprechend.

In neuerer Zeit sind Bezüge aus elastischem Kunststoff bekannt geworden. Sie sind weniger markierungsempfindlich und bestehen aus einem Mantel mit vergleichsweise geringer Wandstärke, der auf einen entsprechend dimensionierten Basiskörper aufgeschoben und gegebenenfalls durch Aufschrumpfen befestigt wird. Im Vergleich zu einer mit Fasermaterial bezogenen Walze hat der Basiskörper einen größeren Durchmesser. Er benötigt auch keine Verschlußelemente.

Der Gesamtaufbau der beiden Walzentypen ist daher sehr unterschiedlich. Werden in einem Betrieb sowohl Walzen mit Faserstoffbezug als auch Walzen mit Kunststoffbezug verwendet, benötigt man auch zwei Typen von Reservewalzen.

Eine Kalanderwalze der eingangs beschriebenen Art ist aus US 3 711 913 A bekannt. Dort besteht die Stützkonstruktion aus einem Faserstoffbezug, der durch eine Vielzahl von Scheiben oder Ronden gebildet ist. Der Bezug kann zunächst eine größere radiale Dicke haben, wird aber im Laufe der Zeit bis auf einen geringeren Durchmesser abgedreht. Diese Scheiben sind relativ porös und relativ weich. Das poröse Material hält Schmiermittel fest und dient als eine Art Docht für ein solches Schmiermittel, so daß eine erhöhte Relativbewegung zwischen dem Kunststoffbezug und der übrigen Walze ermöglicht wird.

Der Erfindung liegt, daher die Aufgabe zugrunde, bei einer Kalanderwalze der eingangs beschriebenen Art einen anderen Weg aufzuzeigen, wie ein und dieselbe Kalanderwalze wahlweise mit einem Faserstoffbezug oder mit einein Kunststoffbezug ausgestattet werden kann.

Diese Aufgabe wird durch die Merkmale des Anspruchs 1 gelöst.

Die Stützkonstruktion aus Leichtmetallronder bietet dem Bezug aus elastischem Kunststoff eine stabile Auflagefläche.

Als Leichtmetall kommen hauptsächlich Aluminium- und Magnesium mit ihren Legierungen in Betracht.

Empfehlenswert ist es, daß die radiale Dicke der Stützkonstruktion 30 bis 100 % des Radius des Basiskörpers beträgt. Hieraus ergibt sich, daß die Stützkonstruktion eine nicht vernachlässigbare Dicke hat. Der untere Grenzbereich erlaubt Walzen mit einem geringeren Durchmesser als demjenigen einer üblichen mit Faserstoffbezug versehenen Walze, was zu einer entsprechenden Gewichtsersparnis führt. Der obere Grenzbereich erlaubt es, einen dünnwandigen Bezug aus elastischem Kunststoff zu verwenden und den gesamten Abstand zwischen diesem Bezug und dem Basiselement durch die Stützkonstruktion zu überbrücken.

Mit Vorzug ist das spezifische Gewicht der Stützkonstruktion wesentlich geringer als das spezifische Gewicht des Basiskörpers. Da als Basiskörper zumeist Stahl mit einem spezifischen Gewicht von etwa 7,8 kg/dm³ verwendet wird, sollte die Stützkonstruktion ein durchschnittliches spezifisches Gewicht von weniger als 3,5 kg/dm³ und insbesondere von weniger als 1,5 kg/dm³ haben. Das Walzengewicht liegt daher in der gleichen Größenordnung wie bei einer Kalanderwalze mit Faserstoffbezug oder ist sogar kleiner. Letzteres ist bei einem Kalander mit einem Walzenstapel von Bedeutung, weil nämlich in den Arbeitsspalten von oben nach unten die Streckenlast jeweils um das Gewicht der darüber liegenden Walzen zunimmt. Je leichter daher die Walze, umso eher ist es möglich, bereits in den oberen Walzenspalten mit einer hohen Streckenlast zu arbeiten, ohne die Grenzbelastung im unteren Spalt zu unterschreiten.

Es empfiehlt sich auch, daß die Stützkonstruktion außen ein dünnwandiges, geschlossenes Rohr aufweist. Ein geschlossenes Rohr besitzt keine Trennfuge, so daß sich eine zylindrische glatte Oberfläche ergibt. Außerdem

kann die Stützkonstruktion unter Vorspannung in die Umfangswand eingebaut werden, wodurch die Steifigkeit erhöht wird.

Die Erfindung wird nachstehend anhand in der Zeichnung dargestellter bevorzugter Ausführungsbeispiele näher erläutert. Es zeigen:
- Fig. 1: eine Kalanderwalze, teilweise im Schnitt, in einer nicht beanspruchten Ausführungsform, die zur Erläuterung des technischen Gebiets der Erfindung dient
- Fig. 2: eine Stützkonstruktion der Fig. 1 in räumlicher Darstellung,
- Fig. 3: ein Ausführungsbeispiel einer erfindungsgemäße Kalanderwalze, teilweise im Schnitt,
- Fig. 4: eine erfindungsgemäße Ronde zur Verwendung bei einer Kalanderwalze nach Fig. 3 und
- Fig. 5: ein anderes Ausführungsbeispiel einer erfindungsgemäßen Kalanderwalze, teilweise im Schnitt.

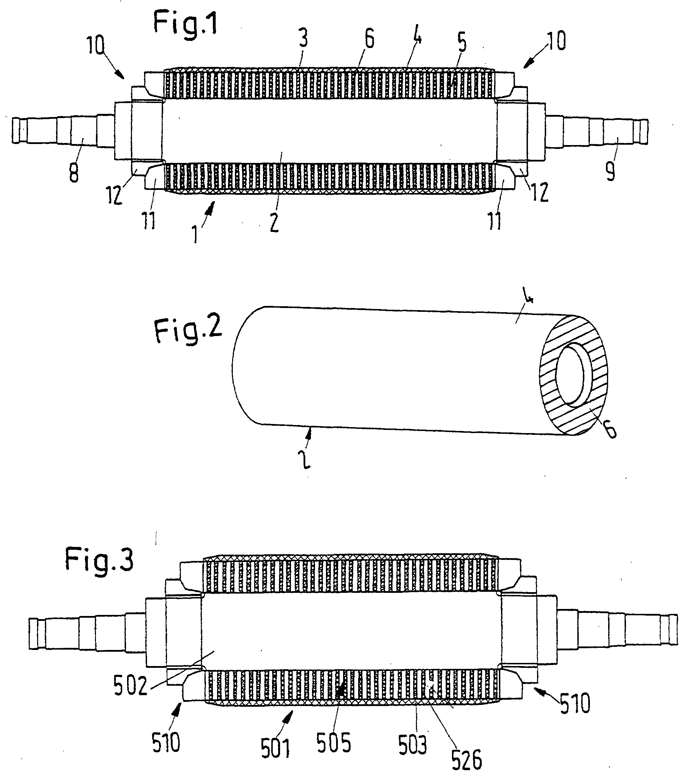

Die in Fig. 1 veranschaulichte Kalanderwalze 1 besitzt einen Basiskörper 2 und einen Bezug 3 aus elastischem Kunststoff, beispielsweise Silikon-Kautschuk oder Epoxidharz. Der Innendurchmesser des Bezuges 3 ist wesentlich größer als der Außendurchmesser des Basiskörpers 2. Der Zwischenraum wird ausgefüllt durch eine eine Umfangswand 4 aufweisende Stützkonstruktion 5. Diese Stützkonstruktion ist so steif ausgeführt, daß sie den elastischen Bezug 3 sicher zu tragen vermag und alle auf die Kalanderwalze 1 ausgeübten Kräfte auf dem Basiskörper 2 überträgt. Die Stützkonstruktion 5 besteht aus einer Vielzahl von Einzelelementen 6 in der Form von ringförmigen Ronden, die in der Mitte ein großes zentrisches Loch 7 zur Aufnahme des Basiskörpers 2 besitzen. An den Enden des Basiskörpers 2 befinden sich Lagerzapfen 8 und 9 und Verschlußelemente 10. Diese bestehen aus je einer Druckplatte 11, die mit Hilfe einer Spannmutter 12 in Richtung auf die Walzenmitte verstellt werden können. Diese Verschlüsse brauchen bei der dargestellten Ausführungsform lediglich die Stützkonstruktion 5 an Ort und Stelle zu halten. Man kann jedoch Stützkonstruktion 5 und elastischen Bezug 3 ersetzen durch einen dicken Bezug aus Fasermaterial. In diesem Fall dienen die Druckplatten 11 dazu, den Stapel aus Faserstoffronden unter einer hohen axialen Druckspannung zu halten. Die Umfangswand 4 ist ein zylindrisches Rohr, das mit der Stützkonstruktion 5 verklebt ist. Bei Verwendung der Verschlußelemente 10 kann auf ein Verkleben zwischen Stützkonstruktion 5 und Basiskörper 2 verzichtet werden.

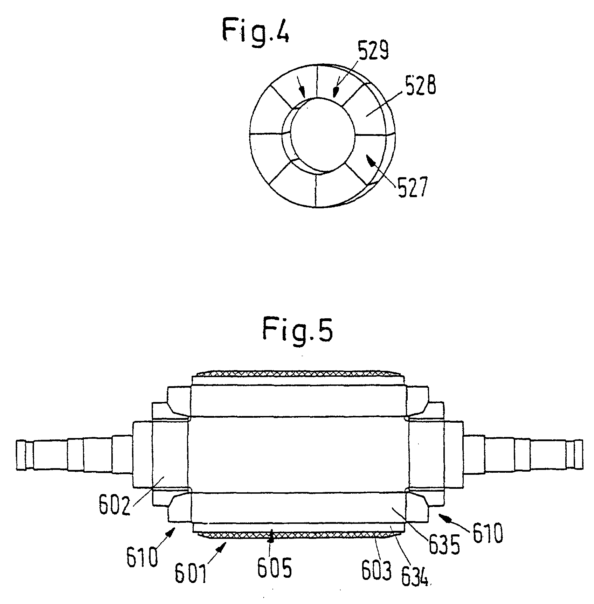

Beim Ausführungsbeispiel der Fig. 3 und 4 mit um 500 erhöhten Bezugszeichen ist eine Kalanderwalze 501 gezeigt, deren Basiskörper 502 mit demjenigen der Fig. 1 übereinstimmt. Ein dünnwandiger Bezug 504 aus Kunststoff ist unmittelbar auf eine Stützkonstruktion 505 aufgezogen. Diese Stützkonstruktion besteht durchgehend aus Ronden 526 aus Leichtmetall, wie Aluminium. Diese Ronden sind durch die Verschlußelemente 510 an Ort und Stelle gehalten.

Bei der Ausführungsform der Fig. 5 mit um 600 erhöhten Bezugszeichen ist eine Kalanderwalze 601 veranschaulicht, die wiederum einen Basiskörper 602 entsprechend der Fig. 1 aufweist. Der Bezug 604 aus Kunststoff ist auf ein glattes äußeres Rohr 634 aufgeschoben und auf diesem verklebt. Das Rohr 634 bildet den Außenumfang einer Stützkonstruktion 605.

Der Kunststoffbezug wird unmittelbar auf die Stützkonstruktion 505 aufgeklebt oder aufgeschrumpft. Es besteht aber auch die Möglichkeit, eine Zwischenschicht (Trägerschicht) zur besseren Verteilung der Lasten vorzusehen. Die Verschlußelemente dienen der Arretierung der Stützkonstruktion auf dem Basiskörper, können aber entfallen, wenn die Arretierung auf andere Weise, z.B. Aufpressen oder Verkleben, erfolgt.

## Patentansprüche

1. Kalanderwalze mit einem zylindrischen Basiskörper (2; 502; 602), einem Bezug (3; 103; 603) aus elastischem Kunststoff, der einen größeren Innendurchmesser besitzt als der Außendurchmesser des Basiskörpers, mit einer im Zwischenraum zwischen Basiskörper und Bezug angeordneten, hohlzylindrischen, durch einen Rondenstapel gebildeten Stützkonstruktion (5; 505; 605), die die Belastungskräfte vom Bezug auf den Basiskörper überträgt und insbesondere mit an den Enden des Basiskörpers angeordneten, den Rondenstapel axial zusammenpressenden Verschlußelementen (10; 510; 610), **dadurch gekennzeichnet, daß** die Stützkonstruktion (5; 505; 605) durch Ronden (526) aus Leichtmetall gebildet ist.

2. Kalanderwalze nach Anspruch 1, **dadurch gekennzeichnet, daß** die Ronden aus Aluminium bestehen.

3. Kalanderwalze nach Anspruch 1 oder 2, **dadurch gekennzeichnet, daß** die radiale Dicke der Stützkonstruktion (5; 505; 605) 30 bis 100 % des Radius des Basiskörpers (2; 502; 602) beträgt.

4. Kalanderwalze nach einem der Ansprüche 1 bis 3, **dadurch gekennzeichnet, daß** die Stützkonstruktion (605) außen ein dünnwandiges, geschlossenes Rohr (634) aufweist.

## Claims

1. Calender roll having a cylindrical base body (2; 502; 602), a cover (3; 103; 603) of resilient polymer, which has a greater internal diameter than the external diameter of the base body, having a hollow cylindrical supporting construction (5; 505; 605) which is arranged in the interspace between base body and cover, is formed by a stack of round sheet-metal plates and transmits the supporting forces from the cover to the base body, and in particular having closure elements (10; 510; 610) which are arranged at the ends of the base body and press the stack of round sheet-metal plates axially together, **characterized in that** the supporting construction (5; 505; 605) is formed from round sheet-metal plates (526) of lightweight metal.

2. Calender roll according to Claim 1, **characterized in that** the round sheet-metal plates consist of aluminium.

3. Calender roll according to Claim 1 or 2, **characterized in that** the radial thickness of the supporting construction (5; 505; 605) is 30 to 100% of the radius of the base body (2; 502; 602).

4. Calender roll according to one of Claims 1 to 3, **characterized in that** the supporting construction (605) has a thin-walled closed tube (634) on the outside.

## Revendications

1. Cylindre de calandrage avec un corps de base cylindrique (2; 502; 602), un revêtement (3; 103; 603) en matière synthétique élastique, qui présente un diamètre intérieur plus grand que le diamètre extérieur du corps de base, avec une structure de soutien cylindrique creuse (5; 505; 605), formée par un empilement de flans circulaires et disposée dans l'espace intermédiaire entre le corps de base et le revêtement, qui transmet les efforts de chargement du revêtement au corps de base et en particulier avec des éléments de blocage (10; 510; 610) disposés aux extrémités du corps de base et comprimant axialement l'empilement de flans circulaires, **caractérisé en ce que** la structure de soutien (5; 505; 605) est formée par des flans circulaires (526) en métal léger.

2. Cylindre de calandrage suivant la revendication 1, **caractérisé en ce que** les flans circulaires sont composés d'aluminium.

3. Cylindre de calandrage suivant la revendication 1 ou 2, **caractérisé en ce que** l'épaisseur radiale de la structure de soutien (5; 505; 605) vaut de 30 à 100 % du rayon du corps de base (2; 502; 602).

4. Cylindre de calandrage suivant l'une quelconque des revendications 1 à 3, **caractérisé en ce que** la structure de soutien (605) présente extérieurement un tube fermé à paroi mince (634).
